Europäisches Patentamt

European Patent Office

Office européen des brevets

(19)

(11) Publication number: **0 081 872**
A2

(12) **EUROPEAN PATENT APPLICATION**

(21) Application number: 82201513.7

(22) Date of filing: 29.11.82

(51) Int. Cl.³: **F 25 B 15/02,** F 04 D 3/02,
C 09 K 5/04

(30) Priority: 14.12.81 NL 8105626

(43) Date of publication of application: 22.06.83
Bulletin 83/25

(84) Designated Contracting States: AT BE CH DE FR GB IT
LI LU NL SE

(71) Applicant: FDO Technische Adviseurs B.V., No. 62,
Oostenburgermiddenstraat, NL-1018 MS Amsterdam
(NL)

(72) Inventor: Van den Elst, Fredrik M. N., No. 461,
Bornerbroeksestraat, NL-7609 PK Almelo (NL)

(74) Representative: 't Jong, Bastiaan Jacobus et al,
OCTROOIBUREAU ARNOLD & SIEDSMA
Sweelinckplein 1, NL-2517 GK 's-Gravenhage (NL)

(54) · **Sorption heat pump device.**

(57) A heat pump (1) of the sorption type comprising a coolant circulation, having a mixture circulation (2) filled with a liquid mixture of substances, a condenser (3) giving off heat to a consumer circulation (6), a restriction (4) and a heat (9) absorbing evaporator (5), whilst the mixture circulation comprises a generator (10) heated by a heat source (12), an absorber (11) connected through a mixture inlet duct (18) and a mixture outlet duct (17) with the generator (10) and also giving off heat to the consumer circulation (6), a restriction (13) included in the mixture outlet duct (17) and a mixture pump (14) included in the mixture inlet duct (18). The mixture is a mixture of high viscosity operating at low pressures and the mixture pump (14) is one of the type having a rotatably driven rotor (20) and a stator (21), at least one of which has at least one spirally or helically extending groove (24) in a surface facing the other.

T/tJ/jzf/5-EU-FDO  European Patent Application No. 82201512.7 in the name of FDO Technische Adviseurs B.V.  0081872

## SORPTION HEAT PUMP DEVICE

The invention relates to a small heat pump of the sorptive type with a coolant circulation comprising a mixture circulation filled with a liquid mixture of substances, a condenser giving off heat to a consumer circulation, a restriction and a heat absorbing evaporator, in which the mixture circulation comprises a generator heated by a heat source, an absorber connected with the generator through a mixture inlet duct and a mixture outlet duct and also giving off heat to the consumer circulation, a restriction included in the mixture outlet duct and a mixture pump included in the mixture inlet duct.

Such a small heat pump device is known and may be employed for domestic heating. The advantage of a heat pump of the sorptive type over a heat pump of the compression type resides in that the major part of the energy can be supplied in the form of heat rather than in the form of mechanical energy. This implies that a sorption heat pump produces less noise and vibrations than a compression heat pump. However, noise and vibrations do yet occur because the high pressure difference of a conventional mixture such as water and ammonia in a small sorption heat pump can only be effectively overcome by a reciprocatory displacer pump. Such a reciprocatory pump produces vibrations which may propagate through the whole system. The noise nuisance thus caused can be suppressed only with difficulty.

The object of the present invention is to provide a heat pump system which is substantially noiseless. According to the invention this is achieved in a heat pump of the kind set forth in that the mixture is a mixture of high viscosity, operating at low pressures and in that the mixture pump is of the type having a rotatably driven rotor and a stator, at least one of which has at least one spirally of helically extending groove in a surface facing the other.

The rotor of a pump of this kind is continuously rotating and, therefore, it does nog give rise to vibrations and hence to troublesome noise. An additional advantage is that a pump of this kind is appreciably cheaper than a reciprocatory displacer pump and has a longer lifetime without the need for inspection. Since, moreover, lower pressures are used, smaller wall thicknesses will suffice so that the overall device is considerably cheaper and safer.

When the pump stator comprises field windings and the rotor is a cage armature, the rotor can rotate enclosed in the mixture. Thus sealing problems are avoided. In an advantageous embodiment the rotor is provided symmetrically in its head faces and its peripheral face with grooves. As a result the forces exerted on the rotor are in a state of equilibrium so that any bush bearings are exposed to minimized forces.

When in accordance with the invention the rotor is designed in this manner it can be loosely included in the stator, since it settles itself in a state of equilibrium. In the operative state the rotor will rotate quite freely in the mixture so that ther is no contact and hence no frictional wear. According to the invention auxiliary bearing means are provided, which are designed so that they are operative only when the pump is switched on. When once the rotor exerts pressure on the mixture, a state of equilibrium is automatically established.

An advantageous mixture for use in a heat pump embodying the invention is a mixture of methanol and bromides such as lithium or zinc bromide. In operation the pressure across the pump is about 1 bar.

The invention will now be described more fully with reference to an embodiment of a sorption heat pump in its simplest design illustrated in the accompanying drawings.

Fig. 1 schematically shows a one-stage absorption heat pump system embodying the invention.

Fig. 2 is a schematic longitudinal sectional view of a mixture pump in one embodiment of the invention.

Fig. 3 shows the mixture pump of Fig. 2 in a perspective view, some parts being broken away.

Fig. 4 shows a different structure of a mixture pump in a longitudinal sectional view.

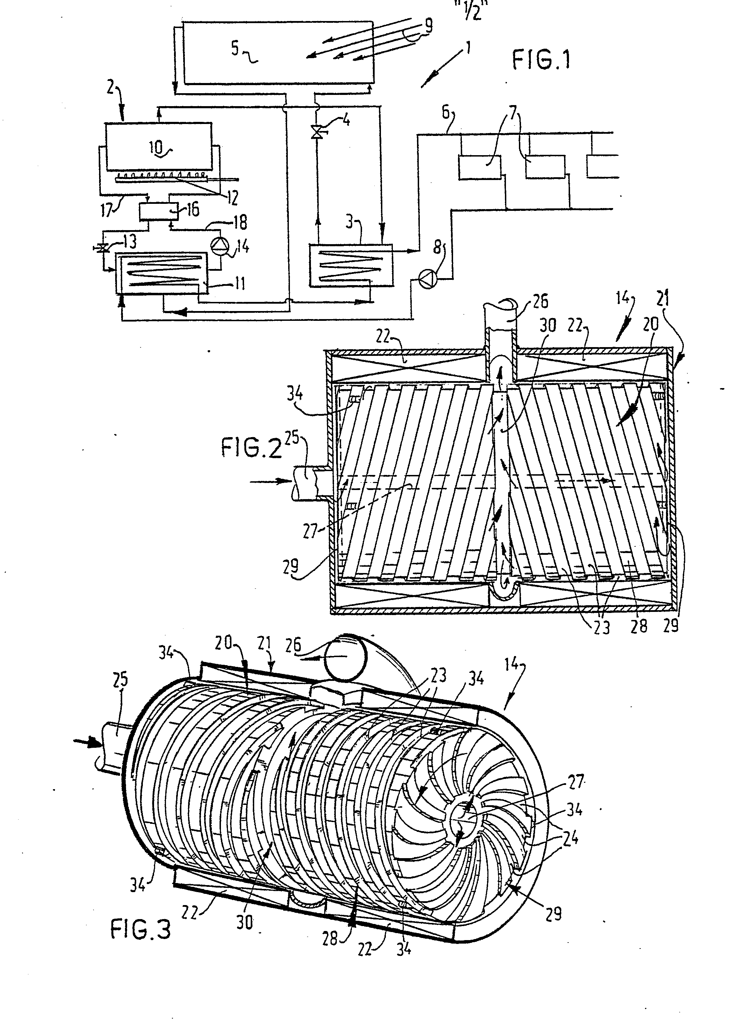

The heat pump 1 of Fig. 1 comprises a coolant circulation consisting of a mixture circulation 2, a condenser 3 giving off heat to a consumer circulation 6, a restriction 4 and an evaporator 5 absorbing heat 9 at a low temperature. The consumer circulation 6 is a domestic central heating system.

In the mixture circulation 2 is circulating a liquid mixture of substances, in this embodiment a mixture of methanol and bromides, between an absorber 11 and a generator 10. In the generator 10 heat from a heat source 12, for example, formed by a gas burner, is supplied to the mixture. As a result part of the methanol evaporates so that the mixture locally has a low concentration of methanol. At the prevailing temperature the vapour pressure is high. In the absorber 11 heat is given off to the cooled fluid from the return duct of the consumer circulation 6 so that in the absorber 11 a lower temperature is prevailing so that the vapour pressure is lower. Owing to this pressure difference the mixture of low methanol concentration flows via the restriction 13 towards the absorber 11. In the absorber 11 the mixture picks up methanol in the form of vapour from the coolant circulation. Therefore, the methanol concentration is higher in the absorber than in the generator. The mixture of high methanol concentration is pumped by the mixture pump 14 to the generator 10, where it is again heated and gives off part of the methanol in the form of vapour. In the mixture inlet duct 18 and the mixture outlet duct 17 is included a heat exchanger 16 in order to maintain the temperature difference between the generator 10 and the absorber 11 and hence a high degree of efficiency.

The vapourous methanol flows, also under the influence of the pressure difference between the generator 10 and the absorber 11 toward the condenser 3, where the methanol vapour condenses whilst giving off heat. This heat is absorbed by the circulating fluid in the consumer circulation 6.

The circulation fluid, usually water, is kept moving by the pump 8 and passed, for example, through radiators 7 disposed in various rooms. The circulating water gives off heat in a concentional manner in these rooms. The consumer circulation 6, with the exception of the part coupled with the condenser 3 and the absorber 11, is identical to a conventional central heating system.

The condensed methanol flows out of the condenser 3 through a restriction 4 towards the evaporator 5. The pressure in the evaporator 5 is substantially equal to the pressure in the absorber 11 and corresponds to a vapour pressure at a very low temperature. As a result the liquid methanol evaporates in the evaporator 5 whilst absorbing heat 9 from the surroundings. The heat 9 may be absorbed in known manner from the air or, for example, from water. From the evaporator 5 vapourous mathanol again flows to the absorber 11. As stated above the vapourous methanol is absorbed in the local mixture.

According to the invention the mixture is one operating at low pressures. The mixture described of methanol and bromides is operative, for example, at a pressure difference of 0.5 bar between the absorber and the generator. Moreover, the mixture pump 14 embodying the invention is one of the kind comprising a rotatably driven rotor 20 and a stator 21, at least one of which, in the example shown, the rotor has spirally or helically extending grooves in a surface facing the stator. In the embodiment of the pump 14 shown the rotor 20 has helically extending grooves 23 in the sheath surface 28 as well as spirally extending grooves 24 in the head faces 29.

The rotor 20 of the pump 14 is designed in the form of a cage armature and the stator 21 comprises fiels windings 22 connected to an alternating-current mains. Upon rotation of the rotor 20 the mixture is compelled radially outwards from the inlet 25 through the grooves 24 in the head faces 29. At the right-hand face 29, as viewed in Fig. 2, mixture from the inlet 25 is supplied through a channel 27 centrally recessed in the rotor. The mixture expelled radially outwards is propelled further through the grooves 23 in the sheath surface 28 on both sides towards the central groove 30. From there the mixture is conducted away via the outlet 26. The direction of flow of the mixture is indicated by arrows.

Since the grooved surfaces have simultaneously the function of groove bearings, the rotor need not to be separately journalled in the stator 22. Only at the start of the pump, when the rotor is standing still and has, therefore, not yet built up a pressure, the rotor has to be prevented from being drawn against the stator 21. In the embodiment shown the auxiliary bearing means provided to this end comprise sliding lugs 34, for example, of teflon, which ensure that the rotor 20 cannot come into contact with the stator 21. When the rotor has once gained a given speed of rotation, a pressure equilibrium establishes, as a result of which the rotor 20 remains at a distance from the opposite stator walls.

The grooves need not be provided both in the sheath surface and the two head faces. Moreover, the grooves need not be symmetrically arranged on the rotor. The pump may be constructed in any appropriate manner, whilst the grooves may, as an alternative, be provided in the stator rather than the rotor.

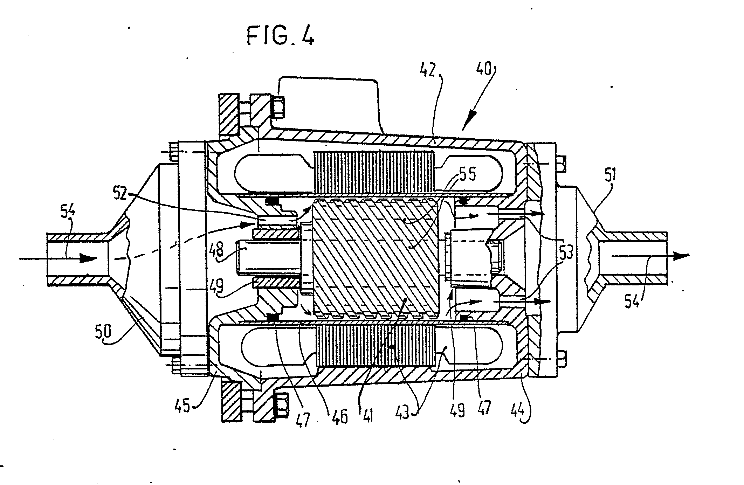

The pump 40 shown in Fig. 4 comprises a rotor 41, which has a plurality of grooves 55 only in its sheath surface. The rotor 41 has a shaft 48, which is mounted in suitable sliding bearings 49. The rotor 41 transports fluid in the direction indicated by the arrow 54 when the rotor 41 is rotating in anti-clockwise direction, viewed from the lefthand side. The pump housing 42 has a front part 45 and a rear part 44. In principle, the construction of the pump corresponds with that of a known central-heating circulation pump. The rotor 41 is designed in the form of a cage armature and cooperates with field windings 43 fed from an alternating-current mains. The rotor 41 and the field windings 43 are separated from one another by a sleeve 46, which is arranged in sealing relationship by sealing rings 47 between the front part 45 and the rear part 44 of the housing 42. At the front the pump 40 is provided with an inlet extension stub 50. The fluid flows through this inlet stub 50 through channels 52 in a front wall of the front part of the housing 45, through the grooves 55 of the rotor 41, then through channels 53 in a wall of the rear part 44 and finally through an outlet stub 51 into a duct connected herewith.

The pattern of the grooves 55 used in this pump 40 is basically the simplest. Herein the reactive forces exerted by the fluid on the rotor are not in a state of equilibrium. These reactive forces are absorbed by the bearings 49.

In the embodiments of the mixture pumps shown vibrations and hence any significant noise do not occur. By using in accordance with the invention, a mixture operating at low pressures and being pumped around by a groove pump, a heat pump of the sorption type is obtained, which does not produce more noise than a conventional central-heating system and which is, therefore, particularly suitable for use in houses and the like.

-1-

CLAIMS
-----------

1. A heat pump of the sorption type comprising a coolant circulation, having a mixture circulation filled with a liquid mixture of substances, a condenser giving off heat to a consumer circulation, a restriction and a heat absorbing evaporator, whilst the mixture circulation comprises a generator heated by a heat source, an absorber connected through a mixture inlet duct and a mixture outlet duct with the generator and also giving off heat to the consumer circulation, a restriction included in the mixture outlet duct and a mixture pump included in the mixture inlet duct, c h a r a c t e r i z e d  in that the mixture is a mixture of high viscosity operating at low pressures and in that the mixture pump is one of the type having a rotatably driven rotor and a stator, at least one of which has at least one spirally or helically extending groove in a surface facing the other.

2. A heat pump as claimed in Claim 1, c h a r a c t e r i z e d  in that the mixture pump comprises stator field windings and in that the rotor is a cage armature.

3. A heat pump as claimed in Claim 2, c h a r a c t e r i z e d  in that in its head faces and in its circumferential surface the rotor is symmetrically provided with grooves.

4. A heat pump as claimed in Claim 3, c h a r a c t e r i z e d  in that the rotor is loosely arranged in the stator and in that only when the mixture pump is switched on auxiliary bearing means become operative.

5. A heat pump as claimed in anyone of Claims 1 to 5, c h a r a c t e r i z e d  in that the mixture is a mixture of methanol and bromides.

-----------

0081872

"½"

FIG.1

FIG.2

FIG.3

FIG. 4